# FASCICULE DE BREVET EUROPEEN

(11) **EP 3 773 952 B1**
(45) Date de publication et mention de la délivrance du brevet: **05.01.2022**
(21) Numéro de dépôt: 19721658.3
(22) Date de dépôt: 26.03.2019
(51) Int. Cl.: A63F 13/24, A63F 13/98

(54) **SUPPORT DE MANETTE POUR JEUX VIDEO DE REALITE VIRTUELLE**
STEUERUNGSUNTERSTÜTZUNG FÜR VIDEOSPIELE DER VIRTUELLEN REALITÄT
CONTROLLER SUPPORT FOR VIRTUAL REALITY VIDEO GAMES

(30) Priorité: 27.03.2018 FR 1852629
(43) Date de publication de la demande: 17.02.2021
(73) Titulaire: Protubevr, Marseille 13002 (FR)
(72) Inventeur: ARMAND, Romain, Marseille 13002 (FR)
(74) Mandataire: Roman, Alexis
(86) Numéro de dépôt international: PCT/FR2019/050694
(87) Numéro de publication internationale: WO 2019/186058

(56) Documents cités:
- CN-A- 106 039 714
- US-A- 4 348 716
- US-A1- 2017 153 084
- The Protubevr Team: "Kit assembly tutorial", , 6 février 2018 (2018-02-06), XP055537847, Extrait de l'Internet: URL:https://docs.wixstatic.com/ugd/92fad4_ 67798185e84a44eaa4b06cf0e571e0c0.pdf [extrait le 2018-12-21]
- MRTV - MIXED REALITY TV: "Maximum Immersion: ProtubeVR Review - VR Rifle for Samsung Odyssey / Windows MR / Vive / Rift", , 20 février 2018 (2018-02-20), page 1, XP054978993, Extrait de l'Internet: URL:https://www.youtube.com/watch?v=-8dMK- Z6ugA [extrait le 2019-01-03]

## Description

### Domaine technique de l'invention.

L'invention a pour objet un support de manette pour jeux vidéo de réalité virtuelle. Elle a également pour objet un dispositif de fixation d'une manette pour jeux vidéo de réalité virtuelle.

Elle concerne le domaine technique des accessoires pour jeux vidéo de réalité virtuelle permettant de rendre encore plus immersive les expériences de jeu, en particulier mais non exclusivement pour des jeux de tir tridimensionnel (3D).

### État de la technique.

Un environnement virtuel immersif comprend des sources de stimuli permettant à un utilisateur d'avoir la sensation d'être complètement immergé dans l'environnement virtuel du jeu vidéo.

Des casques de réalité virtuelle permettent à l'utilisateur de s'immerger dans une scène virtuelle d'un jeu vidéo, par exemple, en déplaçant sa tête et son regard, en effectuant certains gestes et en se déplaçant éventuellement dans un rayon limité.

Un casque de réalité virtuelle se présente sous la forme d'un masque recouvrant les yeux de l'utilisateur. Un écran et des lentilles sont placés à quelques centimètres en face des yeux pour afficher des images virtuelles. Divers capteurs permettent de détecter les mouvements de tête et de regard de l'utilisateur, ce qui permet d'adapter en temps réel l'image projetée sur l'écran, afin de produire l'illusion d'une immersion dans la scène restituée. Ces casques sont par exemple commercialisés sous les marques HTC VIVE^{®}, OCULUS RIFT^{®}, LENOVO^{®}, ou SAMSUNG ODYSSEY^{®}.

Dans des jeux de tir 3D, l'image d'une cible ou d'un ennemi affichée sur l'écran du casque doit être touchée par une balle. La visée de la cible et le tir se fait au moyen d'au moins un contrôleur, ou manette, tenue par le joueur. Ces manettes fonctionnent généralement par paire, une dans chaque main de l'utilisateur.

Ces manettes comprennent généralement un joystick ou pavé tactile pour les déplacements du joueur dans l'environnement virtuel, un ou plusieurs boutons et/ou gâchettes permettant de déclencher des actions dans cet environnement et notamment la pose/dépose d'objets, prise de vue, pointage, tir, etc. Différents capteurs de mouvement et/ou de position sont disposés sur une couronne solidaire du manche de la manette. Elles sont par exemple commercialisées par la société OCULUS^{®} sous la marque OCULUS TOUCH^{®} ou par la société VIVE^{®}. Les documents brevets USD780807, US2017262048 ou encore US2016361637 divulguent également ce type de manette.

Les manettes sont suivies dans l'espace au moyen de différents capteurs/émetteurs (disposés sur les manettes et/ou le casque et/ou dans la pièce où se déroule la partie), de sorte que l'utilisateur puisse interagir avec l'environnement virtuel comme avec ses propres mains. Diverses techniques permettent de synchroniser les images projetées sur l'écran du casque avec la position des manettes. Ces techniques ne font pas l'objet de la présente invention et ne seront donc pas décrites ici. Il en est de même pour les techniques de transmission des données entre le casque, les manettes et l'unité centrale permettant la mise en œuvre du jeu vidéo.

La manipulation des manettes durant une partie affecte de manière significative l'expérience du jeu dans la mesure où les joueurs sont tenus de jouer avec vitesse et précision par rapport à une action. Chaque détail qui rappelle au cerveau du joueur qu'il s'agit d'une réalité virtuelle est susceptible d'interférer avec sa sensation d'immersion et son expérience. Si les manettes actuelles permettent de simuler efficacement la tenue d'un objet dans chaque main (par exemple une arme de point, un couteau, un bâton, ...), le résultat n'est pas aussi bon dès qu'il s'agit de simuler la tenue d'un objet qui se prend avec les deux mains (par exemple un fusil d'assaut, une épée, un club de golf, une canne à pêche, ...).

Dans le domaine des jeux de tir, on connait des reproductions complexes et coûteuses de fusils d'assaut telles que celles décrites dans le document brevet EP1900404 ou celles commercialisées sous les marques DELTA SIX^{®} ou STRIKER VR^{®}.

Toutefois, dans un environnement de réalité virtuelle, le joueur ne voit pas ce qu'il a entre les mains. Un simple support permettant de maintenir les deux manettes dans un alignement paraît amplement suffisant. Ce type de support est aujourd'hui commercialisé par la déposante sous la marque ProTubeVR^{®} (https://www.protubevr.com). Il est ici fait référence au document vidéo "Kit assembly tutorial", (6 février 2018, XP055537847, The Protubevr Team). Ce support se présente sous la forme d'une canne préhensible à deux mains qui simule par exemple un fusil dans le jeu vidéo de réalité virtuelle. Deux logements solidaires de la canne sont adaptés pour recevoir chacun par emboîtement une manette. Chaque logement de manette est solidarisé à la canne par l'intermédiaire d'un tenon articulé autorisant une rotation dudit logement par rapport à l'axe de ladite canne. Le joueur a la sensation de tenir la gâchette d'un fusil dans une main et le canon dans l'autre. Durant la partie, l'impression de tenir une arme virtuelle est bien réelle et le joueur bénéficie d'une précision de tir optimale.

Certains jeux demandent régulièrement d'utiliser indépendamment ses deux manettes pour différents types d'actions tels que recharger son arme, parler à la radio, jeter des objets ou encore interagir avec d'autres joueurs. Autant d'interactions qui demandent au joueur de sortir au moins une manette de son logement puis de l'y replacer. Avec le support ProTubeVR^{®}actuel, le logement reste fixé sur la canne. La manette est extraite du logement par un mouvement vers le haut. La remise en place de la manette dans le logement se fait par un mouvement inverse vers le bas. Ces mouvements haut/bas ne sont pas des plus intuitifs pour le joueur. En outre, à la réinsertion de la manette dans le logement, s'ajoute la difficulté de retrouver la position d'origine à tâtons (le joueur ayant le casque de réalité virtuelle devant ses yeux), ce qui est susceptible de faire perdre un temps parfois précieux sous le feu de l'action.

On connait des supports de manettes commercialisés par la société MAMUT^{®} (http://mamutvr.com) ou commercialisés sous la dénomination MAGNETIC VIVE RIFLE VR (accessible par exemple depuis le site internet https://www.etsy.com/fr/listing/491103695/htc-vive-magnetique-controleur-double), dans lesquels les manettes se fixent par aimantation sur le support. La manette est désolidarisée du support par un mouvement vers l'avant, dans l'axe dudit support. La liaison magnétique comporte un disque aimanté qui se fixe sur le sommet de la couronne de la manette et qui coopère avec une pièce aimantée ou métallique fixée sous le support. Ce type de support présente plusieurs inconvénients. Le disque aimanté rapporté sur la manette présente un poids non négligeable susceptible de provoquer un déséquilibre vers l'avant. De plus, lors de l'assemblage de la manette sur le support, tout ou partie des capteurs positionnés dans la couronne de la manette sont occultés par ledit support. Egalement, la solution par disque aimanté sur la couronne n'est pas compatible avec tous les modèles de manettes, et ne convient notamment pas aux manettes ACER^{®}, LENOVO^{®} ou SAMSUNG où la couronne n'est pas assez rigide pour supporter le disque aimanté. En outre, cette solution n'est pas compatible avec une articulation autorisant la rotation de la manette.

L'invention vise à remédier aux problèmes techniques précités. En particulier, un objectif de l'invention est de proposer un support de manette permettant de solidariser/désolidariser une manette de manière simple, rapide et intuitive pour le joueur.

Un autre objectif de l'invention est de proposer un support de manette facilitant le retour à la position d'origine de la manette après désolidarisation de celle-ci.

Un objectif supplémentaire de l'invention est de proposer un support dont le design n'interfère pas avec les signaux reçus/émis par les capteurs/émetteurs intégrés dans la manette.

Encore un autre objectif de l'invention est de proposer un support qui soit compatible avec un grand nombre de modèles de manette.

Encore un autre objectif de l'invention est de proposer un support de manettes dont la conception est simple, peu onéreuse et facile d'utilisation.

### Divulgation de l'invention.

La solution proposée par l'invention est un support de manette pour jeu vidéo de réalité virtuelle, comportant :
- une canne,
- au moins un logement préhensible adapté pour recevoir par emboîtement une manette,
- le logement de manette est solidarisé à la canne.

Ce support est remarquable en ce que :
- le logement de manette est solidarisé à la canne par l'intermédiaire d'un tenon,
- le logement de manette est configuré pour s'engager de manière amovible sur le tenon,
- une liaison magnétique exerçant une force magnétique assure le maintien en position du logement de manette sur le tenon,
- la liaison magnétique est configurée de sorte que l'engagement/désengagement du logement de manette sur le tenon soit réalisée par un mouvement latéral dudit logement, la force magnétique étant orientée selon la direction de ce mouvement latéral.

Contrairement à la solution ProTubeVR^{®}connue à ce jour, c'est maintenant l'ensemble manette+logement qui est manipulé par le joueur et qui s'engage/désengage du tenon. L'inventeur a constaté que le mouvement latéral nécessaire à cette opération est plus naturel et intuitif qu'un mouvement transversal de bas en haut, et de ce fait plus rapide.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Avantageusement, la direction de la force magnétique est normale au plan médian sagittal de la canne ou orientée selon un angle solide inférieur ou égal à 0,5 stéradian, l'axe de cet angle solide étant normal audit plan médian sagittal.
- Le logement de manette peut comporter une partie aimantée, respectivement une partie métallique, coopérant avec une partie métallique, respectivement aimantée, aménagée sur le tenon.
- Préférentiellement, le logement de manette comporte une partie aimantée coopérant avec une autre partie aimantée aménagée sur le tenon.
- Avantageusement, le logement de manette comporte une réservation qui vient en recouvrement d'une partie du tenon lorsque ledit logement est engagé sur ledit tenon, laquelle réservation est délimitée par une paroi latérale et une paroi de fond.
- La paroi latérale de la réservation est préférentiellement orientée selon la direction du mouvement latéral permettant l'engagement/désengagement du logement de manette, de sorte que ladite paroi latérale fasse office de guidage dudit logement lors de son engagement/désengagement du tenon.
- La partie aimantée du logement de manette est avantageusement disposée au niveau de la paroi de fond.
- Avantageusement, la paroi latérale de la réservation comporte au moins une surface qui vient en prise avec une surface complémentaire de la partie recouverte du tenon lorsque ledit logement est engagé sur ledit tenon et lorsque ledit logement est sollicité dans l'axe de la canne.
- Le tenon peut être monté sur une articulation autorisant une rotation du logement de manette dans un plan passant par l'axe de la canne.
- La canne peut présenter au moins deux portions articulées entre-elles, chacune desdites portions est pourvue d'un logement de manette monté sur une articulation.
- La canne peut comporter une crosse dont une partie est conformée de manière à former un appui-joue, laquelle crosse est montée sur une articulation autorisant un pivotement de ladite crosse par rapport à l'axe de ladite canne.
- Une liaison par clipsage mécanique peut contribuer au maintien en position du logement de manette sur le tenon.
- Avantageusement, le logement de manette comporte des parois internes recouvertes d'un revêtement en caoutchouc ou silicone.
- La manette présente un manche pouvant être pourvu d'une sangle adaptée pour être passée autour du poignet du joueur, le logement de manette ayant une paroi comportant un trou pour le passage de ladite sangle.

Un autre aspect de l'invention concerne un dispositif de fixation d'une manette pour jeux vidéo de réalité virtuelle, comportant :
- un logement adapté pour recevoir par emboîtement une manette,
- un tenon sur lequel se solidarise le logement de manette,
- le logement de manette est configuré pour s'engager de manière amovible sur le tenon,
- une liaison magnétique exerçant une force magnétique assure le maintien en position du logement de manette sur le tenon,
- la liaison magnétique est configurée de sorte que l'engagement/désengagement du logement de manette sur le tenon soit réalisée par un mouvement latéral dudit logement, la force magnétique étant orientée selon la direction de ce mouvement latéral.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une perspective en vue de côté gauche d'un support de manettes conforme à l'invention,
- la figure 2 est une perspective en vue de côté droit du support de manettes selon la figure 1,

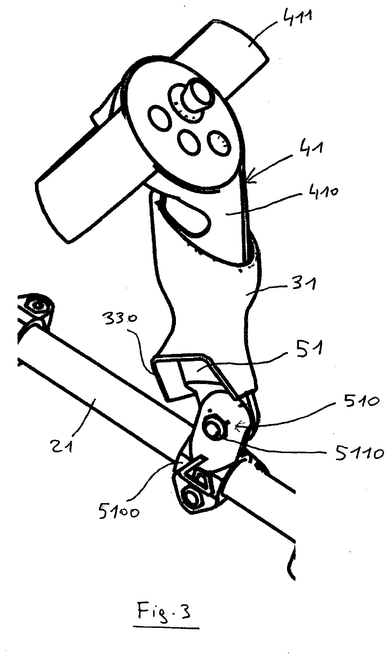

- la figure 3 est une vue agrandie du détail D de la figure 1,
- les figures 4a et 4b montrent en détail une liaison magnétique assurant le maintien en position d'un logement de manette sur une articulation,
- la figure 5 est une vue de dessus d'un support conforme à l'invention, les manettes n'étant pas représentées,
- la figure 6 illustre des mouvements latéraux pour l'engagement/désengagement d'un logement sur son tenon,
- la figure 7 illustre un exemple d'emboîtement d'une manette dans un logement de manette.
- la figure 8 montre un support de manette conforme à l'invention dans un état replié,
- la figure 9a illustre un exemple de liaison magnétique dans un état assemblé,
- la figure 9b illustre la liaison magnétique de la figure 9a dans un état désassemblé.

### Modes préférés de réalisation de l'invention.

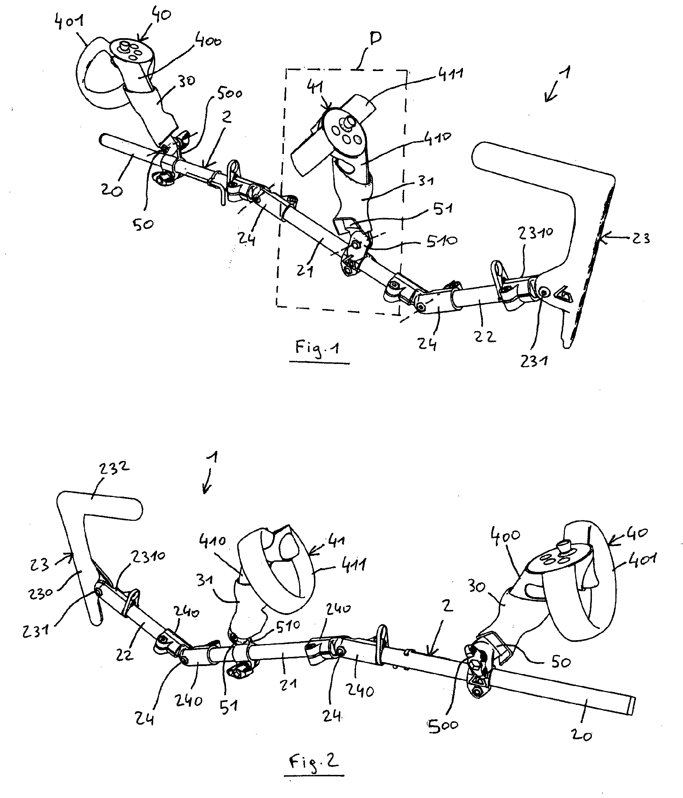

En se rapportant aux figures 1 et 2, le support 1 de manette objet de l'invention se présente sous la forme d'une canne. Cette canne 2 simule un objet dans l'environnement virtuel du jeu vidéo, notamment un fusil, mais également d'autres objets tels qu'une arme de poing, épée, bâton, club de golf, canne à pêche, etc. En d'autres termes, la canne 2 forme un objet simulé virtuel.

La canne 2 peut être droite, courbée ou se présenter sous la forme d'une ligne brisée. Elle a notamment pour fonction de relier physiquement les manettes entre elles et de les maintenir dans un certain alignement.

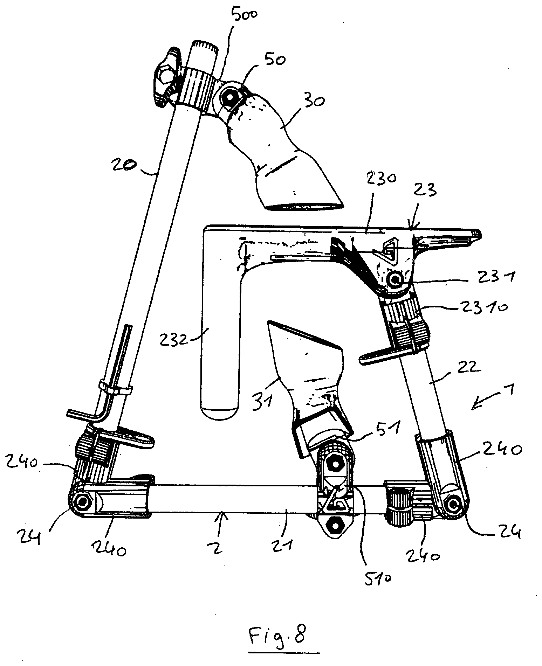

Selon le mode préféré de réalisation illustré sur les figures 1 et 2, la canne 2 présente quatre portions 20, 21, 22, 23 articulées entre-elles : une portion avant 20, une portion de milieu 21, une portion arrière 22 et une crosse 23. Un avantage lié à l'emploi d'une canne 2 articulée est que celle-ci peut être aisément pliée (figure 8), et que dans cet état plié, le support 1 a un encombrement réduit de sorte qu'il puisse être facilement rangé et/ou transporté. En outre, le joueur a la possibilité de conformer la canne 2 pour l'adapter à sa morphologie et/ou au type d'objet simulé virtuel utilisé dans le jeu vidéo.

Les portions avant 20, de milieu 21 et arrière 22 se présentent avantageusement sous la forme de tubes rigides, réalisés en métal, plastique, bois, carbone, etc. Les tubes peuvent être cylindriques, de section ronde, ovale, carrée, rectangulaire, etc. Leur longueur est par exemple comprise entre 15 cm et 30 cm et leur diamètre externe par exemple compris entre 1 cm et 5 cm. Ces portions peuvent avoir la même longueur ou des longueurs différentes. Sur les figures 1 et 2, la portion arrière 22 est par exemple plus courte que les portions avant 20 et de milieu 21.

Les portions 20, 21 et 22 sont avantageusement reliées entre elles au moyen de raccords de tube articulés 24 à deux jonctions 240. Ces raccords 24 forment chacun une liaison pivot d'axe horizontal. Les articulations des raccords 24 sont préférentiellement crantées de sorte que le joueur puisse régler la conformation de la canne 2 à convenance puis bloquer en position les portions 20, 21 et 22 une fois la conformation réalisée.

La crosse 23 peut être réalisée dans le même matériau que les portions articulées 20, 21, 22, 23 ou dans un matériau différent. Pour en simplifier la conception, elle est obtenue par moulage plastique. Sur les figures 1 et 2, cette crosse 23 a une forme générale en L, dont une branche 230 est montée sur une articulation 231. L'autre branche 232 est orientée selon la même direction que la canne 2, vers la portion avant 20. La branche 232 forme un appui-joue particulièrement utile au joueur lorsqu'il veut ajuster un tir.

L'articulation 231 forme une liaison pivot d'axe horizontal autorisant une rotation de la crosse 23 par rapport à l'axe de la canne 2. Par « axe de la canne », on entend ici l'axe longitudinal de la canne 2 lorsque celle-ci est rectiligne, ou l'axe longitudinal de la portion arrière 22 lorsque ladite canne n'est pas rectiligne. L'articulation 231 se présente préférentiellement sous la forme d'une articulation crantée comportant une partie 2310 dans laquelle s'emboîte fixement une extrémité de la portion arrière 22. Le crantage permet au joueur de régler l'inclinaison de la crosse 23 à convenance puis de la bloquer en position une fois ce réglage effectué.

Le support 1 est pourvu de deux logements 30, 31 adaptés pour recevoir chacun une manette 40, 41. Ces logements 30, 31 peuvent être réalisés en métal, plastique, carbone, etc. Sur les figures annexées, ils sont disposés sur les portions avant 20 et de milieu 21 de la canne 2.

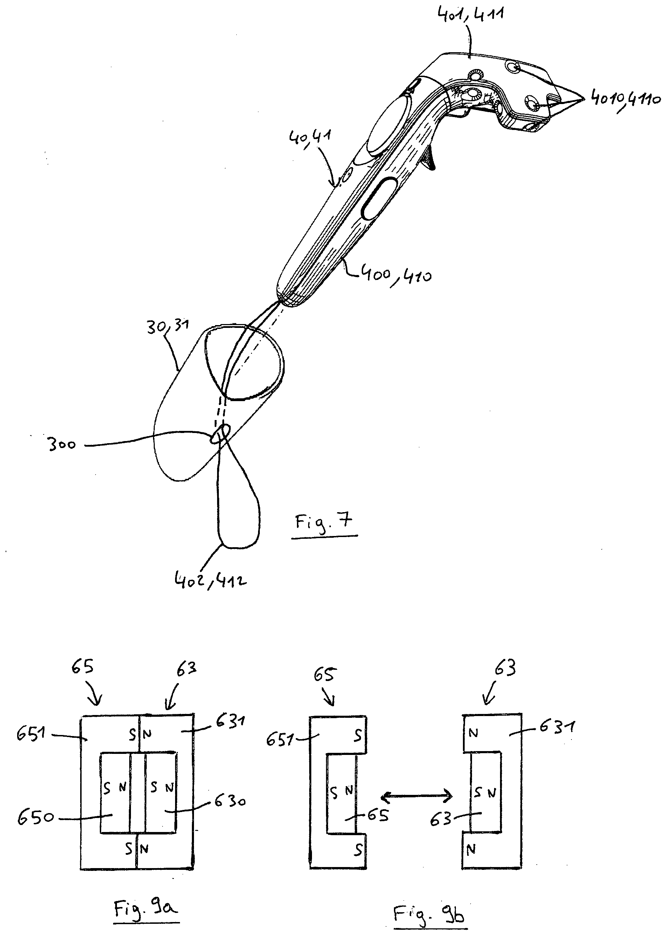

En se rapportant notamment à la figure 7, la manette 40, 41 comporte un manche 400, 410 à l'extrémité duquel est aménagée une couronne 401, 411 supportant les capteurs/émetteurs 4010, 4110.

Chaque logement 30, 31 a la forme d'une coupe ou coupelle dans laquelle s'emboîte le manche 400, 410 de la manette 40, 41. Cet emboîtement se fait selon l'axe du manche 400, 410, et de manière générale selon un mouvement du haut vers le bas. Les dimensions internes du logement 30, 31 sont ajustées à celles du manche 400, 410 de sorte que le manche 400, 410 soit maintenu en position assez fermement. Les dimensions internes du logement 30, 31 sont adaptées au modèle de manettes utilisé par le joueur (VIVE^{®}, OCULUS RIFT^{®}, ACER^{®}, LENOVO^{®}, et SAMSUNG^{®}, HP^{®}, DELL^{®}), de sorte que le manche 400, 410 s'engage avec un ajustement serré dans ledit logement 30, 31. On peut donc prévoir un logement spécifique par modèle de manette. Pour améliorer le maintien en position du manche 400, 410 dans le logement 30, 31, les parois internes de ce dernier sont avantageusement recouvertes d'un revêtement du type de caoutchouc ou silicone, assurant une adhérence supplémentaire.

Sur la figure 7, le manche 400, 410 est pourvu d'une sangle ou dragonne 402, 412 adaptée pour être passée autour du poignet du joueur pour éviter que la manette 40, 41 ne tombe si on la lâche accidentellement lors de manipulation. Pour conserver cette attache lorsque le manche 400, 410 est emboîté dans le logement 30, 31, la paroi de ce dernier comporte un trou de passage 300 de la sangle 402, 412.

Chaque logement 30, 31 est solidarisé à la canne 2 par l'intermédiaire d'un tenon 50, 51. Ces tenons 50, 51 font saillie vers le haut de la canne 2 de sorte que ladite canne se retrouve positionnée sous les manettes 40, 41. Les capteurs/émetteurs 4010, 4110 portés par les couronnes 401, 411 sont ainsi parfaitement découverts lorsque les manettes 40, 41 sont emboîtées dans leur logement 30, 31 respectif, aucun élément du support 1 ne venant les occulter.

Chaque tenon 50, 51 est préférentiellement réalisé dans un matériau non magnétique tel que le plastique, bois, carbone, etc. Il peut présenter une section ronde, ovale, carrée, rectangulaire, etc. Sa hauteur est par exemple comprise entre 1 cm et 10 cm et sa largeur/épaisseur par exemple comprise entre 0,5 cm et 5 cm.

Avantageusement, chaque tenon 50, 51 est monté sur une articulation 500, 510 autorisant une rotation du logement 30, 31 dans un plan passant par l'axe de la canne 2, et partant une rotation de la manette 40, 41. Par « axe de la canne », on entend ici l'axe longitudinal de la canne 2 lorsque celle-ci est rectiligne ou, lorsque ladite canne n'est pas rectiligne, l'axe longitudinal de la portion 20, 21 sur laquelle est disposé le logement 30, 31. Le joueur a ainsi la possibilité de régler de manière précise l'inclinaison de chaque manette 40, 41, par exemple pour optimiser la précision d'un tir.

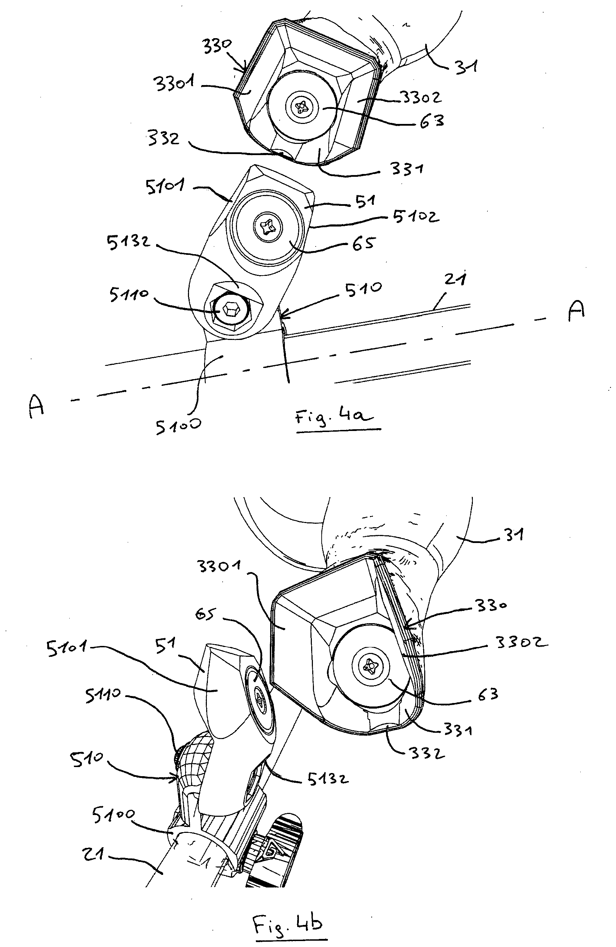

Le montage d'un tenon 51 sur une articulation 510 apparaît clairement sur les figures 4a et 4b, étant entendu que le montage de l'autre tenon 50 sur l'autre articulation 500 est identique. L'articulation 510 comporte avantageusement un collier de serrage 5100 permettant de la maintenir en position sur la portion 21, avec une possibilité de débattement angulaire autour de l'axe longitudinal de ladite portion. Aussi, les deux articulations 500 et 510 ne sont pas nécessairement alignées mais peuvent être désaxées selon les besoins de réglage du joueur. Le collier de serrage 5100 est surmonté d'une partie portant l'axe de rotation 5110. Ce dernier est perpendiculaire ou sensiblement perpendiculaire à l'axe longitudinal de la portion 21. L'axe de rotation 5110 se présente par exemple sous la forme d'une tige ou vis en prise également avec le tenon 51.

Une interface crantée peut être prévue entre le tenon 51 et l'articulation 510 de sorte que le joueur puisse régler l'inclinaison dudit tenon (et donc du logement 31) à sa convenance puis le bloquer en position une fois ce réglage effectué. On peut également prévoir une articulation crantée au niveau d'un tenon et une articulation lisse au niveau de l'autre tenon. Par exemple, en se rapportant aux figures 1 et 2, l'articulation avant 500 peut être lisse tandis que l'articulation arrière 510 est crantée. Une telle configuration offre au joueur la possibilité de modifier à tout moment l'inclinaison de la manette avant 40, par exemple pour s'adapter à une séquence de jeu, alors que l'autre manette arrière 41 reste avec une inclinaison fixe. Les deux articulations 500, 510 peuvent également être toutes deux des articulations lisses.

Selon une caractéristique de l'invention, les logements 30, 31 sont préhensibles et s'engagent de manière amovible sur les tenons 50, 51. Pour désengager une manette 40, 41 de la canne 12, le joueur doit donc la manipuler en saisissant le logement dans lequel elle est emboîtée, lequel logement se substitue alors au manche 400, 410 de ladite manette. Pour améliorer la préhension des logements 30, 31, leur paroi externe peut être conformée de manière ergonomique pour s'adapter à la main du joueur.

L'inventeur a constaté qu'un mouvement latéral du logement 30, 31 pour engager/désengager la manette 40, 41 de la canne 2 était beaucoup plus naturel et intuitif pour le joueur, qu'un mouvement transversal de bas en haut ou de haut en bas comme avec les supports MAMUT^{®}, MAGNETIC VIVE RIFLE VR ou ProTubeVR^{®}connus à ce jour.

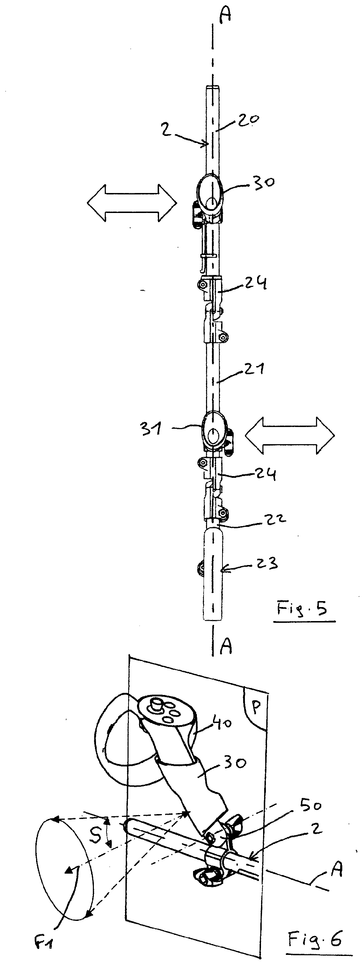

La figure 5 montre le support 1 vue de haut, le plan de la planche de dessin correspondant au plan transversal de la canne 2. Le mouvement latéral des logements 30, 31 est un mouvement de côté par rapport à l'axe A-A de la canne 2, lequel mouvement latéral de côté est illustré par les doubles flèches. Le joueur doit saisir le logement 30, 31 et effectuer une translation et/ou une rotation latérale de sa main ou de son avant-bras pour l'engager/désengager de son tenon. En se rapportant à la figure 6, ce mouvement latéral peut être réalisé perpendiculairement au plan médian sagittal P de la canne 2 (selon la flèche F1) ou selon un angle solide 'S' inférieur ou égal à 0,5 stéradian (Pi/6 pour un angle plan équivalent), l'axe de cet angle solide étant normal au plan médian sagittal P de ladite canne.

La figure 5 illustre une configuration pour droitier où le joueur saisit le logement avant 30 avec sa main gauche et le logement arrière 31 avec sa main droite. Le mouvement le plus naturel et intuitif pour le joueur consiste à désengager le logement avant 30 en effectuant un mouvement de la droite vers la gauche et à le réengager par un mouvement de la gauche vers la droite. A l'inverse, le logement arrière 31 est désengagé en effectuant un mouvement de la gauche vers la droite et réengagé par un mouvement de la droite vers la gauche.

Un joueur gaucher saisira le logement avant 30 avec sa main droite et le logement arrière 31 avec sa main gauche. Le mouvement le plus naturel et intuitif pour ce joueur consiste à désengager le logement avant 30 en effectuant un mouvement de la gauche vers la droite et à le réengager par un mouvement de la droite vers la gauche. Le logement arrière 31 sera désengagé en effectuant un mouvement de la droite vers la gauche et réengagé par un mouvement de la gauche vers la droite.

Préférentiellement, c'est une liaison magnétique exerçant une force magnétique qui assure le maintien en position du logement 30, 31 sur le tenon 50, 51. On obtient ainsi une liaison par « clipsage magnétique ». Cette liaison magnétique est configurée de sorte que l'engagement/désengagement du logement 30, 31 sur le tenon 50, 51 soit réalisée par le mouvement latéral dudit logement, la force magnétique étant orientée selon la direction de ce mouvement latéral, c'est-à-dire selon les flèches illustrées sur les figures 5 et 6. La direction de la force magnétique est donc normale au plan médian sagittal P de la canne 2 ou orientée selon l'angle solide 'S' précité.

En pratique, lorsque le joueur a un casque de réalité virtuelle couvrant ses yeux, une manette 40, 41 tenue dans une main et désolidarisée de la canne 2, il arrive à retrouver de manière assez intuitive la position approximative du tenon 30, 31. Une fois aux alentours du tenon 50, 51, c'est la force magnétique qui va finir de guider le logement 30, 31 vers ledit tenon. La liaison magnétique a donc une double fonction : assurer le maintien en position du logement 30, 31 sur le tenon 50, 51 ; et diriger le logement 30, 31 dans une direction déterminée de retour lorsqu'il est à proximité dudit tenon 50, 51.

Sur les figures 4a et 4b, le logement 31 comporte une partie aimantée 63 coopérant avec une partie métallique 65 aménagée sur le tenon 51. Une configuration inverse peut être envisagée où le logement 31 comporte une partie métallique 63 coopérant avec une partie aimantée 65 aménagée sur le tenon 51. Les meilleurs résultats sont obtenus lorsque le logement 30, 31 et le tenon 50, 51 comportent tous deux une partie aimantée qui coopèrent ensemble. Préférentiellement, on utilise des aimants permanents exerçant chacun une force équivalente à environ 11 Kg (l'équivalent de la force (poids) exercée par une masse d'environ 11 Kg dans le champ moyen de gravité terrestre). Ce type d'aimant est un bon compromis entre une adhérence efficace du logement 30, 31 sur le tenon 50, 51 ; un désengagement aisé du logement 30, 31 par un mouvement latéral ; et une bonne guidance magnétique lors de la phase de réengagement du logement 30, 31 sur le tenon 50, 51.

Sur les figures 4a et 4b, le logement 31 présente une réservation délimitée par une paroi latérale 330 et une paroi de fond 331. Cette paroi de fond 331 est préférentiellement située dans un plan parallèle au plan médian sagittal P de la canne 2 et/ou dans un plan perpendiculaire à la direction de la force magnétique. La paroi latérale 330 a une section en forme de U ou de C. La paroi latérale 330 vient ainsi en recouvrement de la partie supérieure du tenon 51 lorsque ledit logement est engagé sur ledit tenon. Le tenon 51, et notamment sa partie supérieure, a une forme complémentaire de la réservation du logement 31 de manière à assurer un emboîtement ajusté de ces deux éléments.

La paroi latérale 330 est orientée selon la direction du mouvement latéral d'engagement/désengagement du logement 31 sur le tenon 51. Elle fait ainsi office de guide lors des phases d'engagement/désengagement du logement 31. Ce guidage est amélioré lorsque la paroi latérale 330 est évasée, c'est-à-dire qui va en s'élargissant depuis la paroi de fond 331. La paroi latérale 330 a alors la forme générale d'un tronc de pyramide à trois côtés.

Au cours de séquences de jeu particulièrement actives, il peut arriver que le joueur sollicite brusquement les manettes 40, 41 assemblées sur la canne 2. C'est par exemple le cas lors d'une séquence de jeu de tir où de nombreux ennemis doivent être éliminés rapidement ou durant une séquence de jeu de pêche où le joueur doit virtuellement tirer sur sa canne à pêche pour tirer un poisson hors de l'eau. Dans ce type de séquence, les manettes 40, 41 sont généralement sollicitées dans l'axe de la canne 2, par un mouvement brusque avant/arrière. Pour ne pas gêner l'expérience virtuelle du joueur, il est important que les logements 30, 31 ne se désolidarisent pas des tenons 50, 51 suite à ces mouvements brusques. Pour ce faire, et comme illustré sur les figures 4a et 4b, la paroi latérale 330 comporte au moins une, préférentiellement deux surfaces actives 3301, 3302 qui viennent chacune en prise avec une surface complémentaire 5101, 5102 de la partie recouverte du tenon 51, 52 lorsque ledit logement est engagé sur ledit tenon et lorsque ledit logement est sollicité dans l'axe de la canne 2. Dans le mode de réalisation de la figure 4a, la surface active 3301 vient en prise avec la surface active 5101 lorsque le logement 31 est sollicité dans l'axe A-A de la canne 2, vers la droite de la planche de dessin. Et la surface active opposée 3302 vient en prise avec la surface active complémentaire 5102 lorsque le logement 31 est sollicité dans l'axe A-A de la canne 2, vers la gauche de la planche de dessin.

Ainsi conformées, la réservation du logement 31 et la partie du tenon 51 qui est recouverte par cette réservation, forment des éléments de butée qui sont en prise lorsque ledit logement est engagé sur ledit tenon et qui coopèrent lorsque ledit logement est sollicité dans l'axe A-A de la canne 2. Par contre, ces éléments de butée ne coopèrent pas lorsque le logement 31 est sollicité latéralement, de façon à autoriser l'engagement/désengagement dudit logement.

Lorsque ces éléments de butée sont en prise et coopèrent, ils permettent également au joueur de transmettre le couple permettant de régler l'inclinaison d'un tenon 50 et/ou 51 lorsque celui-ci est monté sur une articulation 500, 510.

Sur les figures 4a et 4b, la partie aimantée 63 aménagée sur le logement 31 est disposée au niveau de la paroi de fond 331, et maintenue sur cette dernière par vissage ou collage. La partie aimantée 65 aménagée sur le tenon 51 est quant à elle disposée au niveau d'une paroi latérale dudit tenon, laquelle paroi latérale est en vis-à-vis de la paroi de fond 331 lorsque le logement 31 est engagé sur ledit tenon. La partie aimantée 65 est également maintenue sur la paroi du tenon 51 par vissage ou collage.

Selon une caractéristique avantageuse de l'invention illustrée sur les figures 9a et 9b, les parties aimantées 63 et 65 se présentent chacune sous la forme d'aimant en pot. Dans ce type de montage, l'aimant 630, 650 (présentant des pôles Nord 'N' et Sud 'S') est inséré à l'intérieur d'une coupelle en acier 631, 651, formant un « pot ». Les pôles des aimants 630, 650 sont inversés de manière à générer une force d'attraction des parties aimantées 63 et 65. Lorsque les parties aimantées 63, 65 sont en contact l'une avec l'autre (figure 9a), les bords des coupelles 631, 651 sont en contact, les aimants 630, 650 pouvant être en léger retrait de ces bords de sorte qu'ils ne sont pas en contact direct. Les coupelles 631, 651 dévient toutes les lignes du champ magnétique en direction de la surface de contact. La force magnétique est ainsi concentrée sur la surface de contact, ce qui améliore de fait l'adhérence du logement 30, 31 sur le tenon 50, 51. En outre, l'inventeur a constaté que ces aimants en pot contribuaient à un auto-centrage du logement 30, 31 sur le tenon 50, 51.

En se rapportant aux figures 4a et 4b, la réservation du logement 31 présente un ergot 332 qui fait saillie depuis la paroi de fond 331. Cet ergot 332 est situé au niveau du côté libre de la paroi de fond 331, c'est-à-dire le côté dépourvu de la paroi latérale 330. L'ergot 332 est configuré pour s'engager contre une surface active 5132 du tenon 51, lorsque le logement 31 est engagé sur ce dernier. La coopération de l'ergot 332 et de la surface active 5132 permet de finaliser l'auto-centrage du logement 30, 31 sur le tenon 50, 51.

L'ergot 332 et la surface active 5132 peuvent également former une liaison par clipsage mécanique contribuant au maintien en position du logement 30, 31 sur le tenon 50, 51. Cette liaison par clipsage mécanique vient en complément de la liaison par clipsage magnétique décrite précédemment. Dans une variante de réalisation non couverte par l'invention, le maintien en position du logement 30, 31 sur le tenon 50, 51 n'est assuré que par cette liaison par clipsage mécanique.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- La canne 2 peut être simplement d'un seul tenant, sans articulation, ou ne comporter que deux portions articulées, dont la crosse arrière.
- Un seul logement 30 ou 31 peut être solidarisé à la canne 2.
- Les tenons 50, 51 peuvent être réalisés en métal ou acier.
- Chaque tenon 30, 31, ou un seul d'entre eux, peut être monté fixement sur la canne 2, c'est-à-dire sans possibilité de rotation, par exemple par vissage ou soudage.
- Un seul des deux logements 30, 31 peut s'engager de manière amovible sur son tenon 50, 51, l'autre logement étant monté fixement sur son tenon, c'est-à-dire sans possibilité de désengagement durant la partie.
- La paroi latérale 330 de la réservation aménagée dans le logement 30, 31 peut avoir la forme générale d'un tronc de cône, ou toute autre forme convenant à l'homme du métier, le tenon 51 ou au moins une partie de celui-ci ayant alors une forme complémentaire de cette réservation.

## Revendications

1. Support de manette pour jeux vidéo de réalité virtuelle, comportant :
- une canne (2),
- au moins un logement (30, 31) préhensible adapté pour recevoir par emboîtement une manette (40, 41),
- le logement de manette (30, 31) est solidarisé à la canne (2),
**se caractérisant par le fait que** :
- le logement de manette (30, 31) est solidarisé à la canne (2) par l'intermédiaire d'un tenon (50, 51),
- le logement de manette (30, 31) est configuré pour s'engager de manière amovible sur le tenon (50, 51),
- une liaison magnétique exerçant une force magnétique assure le maintien en position du logement de manette (30, 31) sur le tenon (50, 51),
- la liaison magnétique est configurée de sorte que l'engagement/désengagement du logement de manette (30, 31) sur le tenon (50, 51) soit réalisée par un mouvement latéral dudit logement, la force magnétique étant orientée selon la direction de ce mouvement latéral.

2. Support selon la revendication 1, dans lequel la direction de la force magnétique est normale au plan médian sagittal (P) de la canne (2) ou orientée selon un angle solide (S) inférieur ou égal à 0,5 stéradian, l'axe de cet angle solide étant normal audit plan médian sagittal.

3. Support selon l'une des revendications 1 ou 2, dans lequel le logement de manette (30, 31) comporte une partie aimantée (63), respectivement une partie métallique, coopérant avec une partie métallique (65), respectivement aimantée, aménagée sur le tenon (50, 51).

4. Support selon l'une des revendications 1 ou 2, dans lequel le logement de manette (30, 31) comporte une partie aimantée (63) coopérant avec une autre partie aimantée aménagée sur le tenon (50, 51).

5. Support selon l'une des revendications 1 à 4, dans lequel le logement de manette (30, 31) comporte une réservation qui vient en recouvrement d'une partie du tenon (50, 51) lorsque ledit logement est engagé sur ledit tenon, laquelle réservation est délimitée par une paroi latérale (330) et une paroi de fond (331).

6. Support selon la revendication 5, dans lequel la paroi latérale (330) de la réservation est orientée selon la direction du mouvement latéral permettant l'engagement/désengagement du logement de manette (30, 31), de sorte que ladite paroi latérale fasse office de guidage dudit logement lors de son engagement/désengagement du tenon (50, 51).

7. Support selon l'une des revendications 5 ou 6 prise en combinaison avec l'une des revendications 3 ou 4, dans lequel la partie aimantée (65) du logement de manette (30, 31) est disposée au niveau de la paroi de fond (331).

8. Support selon l'une des revendications 5 à 7, dans lequel la paroi latérale (330) de la réservation comporte au moins une surface (3301, 3302) qui vient en prise avec une surface complémentaire (5101, 5102) de la partie recouverte du tenon (50, 51) lorsque ledit logement est engagé sur ledit tenon et lorsque ledit logement est sollicité dans l'axe de la canne (2).

9. Support selon l'une des revendications 1 à 8, dans lequel le tenon (50, 51) est monté sur une articulation (500, 510) autorisant une rotation du logement de manette (30, 31) dans un plan passant par l'axe de la canne (2).

10. Support selon l'une des revendications 1 à 9, dans lequel la canne (2) présente au moins deux portions (20, 21) articulées entre-elles, chacune desdites portions est pourvue d'un logement de manette (30, 31) monté sur une articulation (500, 510).

11. Support selon l'une des revendications 1 à 10, dans lequel la canne (2) comporte une crosse (23) dont une partie (232) est conformée de manière à former un appui-joue, laquelle crosse est montée sur une articulation (231) autorisant un pivotement de ladite crosse par rapport à l'axe de ladite canne.

12. Support selon l'une des revendications 1 à 11, dans lequel une liaison par clipsage mécanique (332, 5132) contribue au maintien en position du logement de manette (30, 31) sur le tenon (50, 51).

13. Support selon l'une des revendications 1 à 12, dans lequel le logement de manette (30, 31) comporte des parois internes recouvertes d'un revêtement en caoutchouc ou silicone.

14. Support selon l'une des revendications 1 à 13, dans lequel la manette (40, 41) présente un manche (400, 410) pourvu d'une sangle adaptée pour être passée autour du poignet du joueur, le logement de manette (30, 31) ayant une paroi comportant un trou (300) pour le passage de ladite sangle.

15. Dispositif de fixation d'une manette pour jeux vidéo de réalité virtuelle, comportant :
- un logement (30, 31) préhensible adapté pour recevoir par emboîtement une manette (40, 41),
**se caractérisant par le fait que** :
- le dispositif comporte un tenon (50, 51) sur lequel se solidarise le logement de manette (30, 31),
- le logement de manette (30, 31) est configuré pour s'engager de manière amovible sur le tenon (50, 51),
- une liaison magnétique exerçant une force magnétique assure le maintien en position du logement de manette (30, 31) sur le tenon (50, 51),
- la liaison magnétique est configurée de sorte que l'engagement/désengagement du logement de manette (30, 31) sur le tenon (50, 51) soit réalisée par un mouvement latéral dudit logement, la force magnétique étant orientée selon la direction de ce mouvement latéral.

## Patentansprüche

1. Controllerabstützung für Videospiele der virtuellen Realität, welche aufweist:
- einen Stock (2),
- wenigstens eine greifbare Aufnahme (30, 31), die dazu eingerichtet ist, einen Controller (40, 41) durch Einstecken aufzunehmen,
- wobei die Controlleraufnahme (30, 31) mit dem Stock (2) fest verbunden ist,
**dadurch gekennzeichnet, dass**:
- die Controlleraufnahme (30, 31) mit dem Stock (2) über einen Zapfen (50, 51) fest verbunden ist,
- die Controlleraufnahme (30, 31) dafür ausgelegt ist, lösbar am Zapfen (50, 51) in Eingriff zu gelangen,
- eine magnetische Verbindung, die eine Magnetkraft ausübt, das Halten der Controlleraufnahme (30, 31) in ihrer Position auf dem Zapfen (50, 51) sicherstellt,
- die magnetische Verbindung derart gestaltet ist, dass der Eingriff/das Lösen der Controlleraufnahme (30, 31) am bzw. vom Zapfen (50, 51) durch eine seitliche Bewegung dieser Aufnahme bewirkt wird, wobei die Magnetkraft in die Richtung dieser seitlichen Bewegung gerichtet ist.

2. Abstützung nach Anspruch 1, wobei die Richtung der Magnetkraft normal zur sagittalen Mittelebene (P) des Stocks (2) ist oder in einem Raumwinkel (S) ausgerichtet ist, der kleiner oder gleich 0,5 Steradiant ist, wobei die Achse dieses Raumwinkels normal zur sagittalen Mittelebene ist.

3. Abstützung nach einem der Ansprüche 1 oder 2, wobei die Controlleraufnahme (30, 31) einen magnetisierten Teil (63) bzw. einen metallischen Teil aufweist, der mit einem metallischen (65) bzw. magnetisierten Teil zusammenwirkt, der am Zapfen (50, 51) angeordnet ist.

4. Abstützung nach einem der Ansprüche 1 oder 2, wobei die Controlleraufnahme (30, 31) einen magnetisierten Teil (63) aufweist, der mit einem anderen magnetisierten Teil zusammenwirkt, der am Zapfen (50, 51) angeordnet ist.

5. Abstützung nach einem der Ansprüche 1 bis 4, wobei die Controlleraufnahme (30, 31) eine Aussparung aufweist, die mit einem Teil des Zapfens (50, 51) zur Deckung kommt, wenn die Aufnahme am Zapfen in Eingriff steht, wobei diese Aussparung von einer Seitenwand (330) und einer Bodenwand (331) begrenzt wird.

6. Abstützung nach Anspruch 5, wobei die Seitenwand (330) der Aussparung in der Richtung der seitlichen Bewegung ausgerichtet ist, die den Eingriff/das Lösen der Controlleraufnahme (30, 31) ermöglicht, so dass die Seitenwand als Führung der Aufnahme bei ihrem Eingriff/Lösen am bzw. vom Zapfen (50, 51) dient.

7. Abstützung nach einem der Ansprüche 5 oder 6 in Kombination mit einem der Ansprüche 3 oder 4, wobei der magnetisierte Teil (65) der Controlleraufnahme (30, 31) an der Bodenwand (331) angeordnet ist.

8. Abstützung nach einem der Ansprüche 5 bis 7, wobei die Seitenwand (330) der Aussparung wenigstens eine Fläche (3301, 3302) aufweist, welche mit einer komplementären Fläche (5101, 5102) des bedeckten Teils des Zapfens (50, 51) in Eingriff gelangt, wenn die Aufnahme am Zapfen in Eingriff steht und wenn die Aufnahme in Richtung der Achse des Stocks (2) beaufschlagt wird.

9. Abstützung nach einem der Ansprüche 1 bis 8, wobei der Zapfen (50, 51) an einem Gelenk (500, 510) angebracht ist, das eine Drehung der Controlleraufnahme (30, 31) in einer Ebene ermöglicht, die durch die Achse des Stocks (2) verläuft.

10. Abstützung nach einem der Ansprüche 1 bis 9, wobei der Stock (2) wenigstens zwei gelenkig miteinander verbundene Abschnitte (20, 21) aufweist und jeder dieser Abschnitte mit einer Controlleraufnahme (30, 31) versehen ist, die an einem Gelenk (500, 510) angebracht ist.

11. Abstützung nach einem der Ansprüche 1 bis 10, wobei der Stock (2) einen Kolben (23) aufweist, von dem ein Teil (232) so gestaltet ist, dass er eine Wangenauflage bildet, wobei dieser Kolben an einem Gelenk (231) angebracht ist, das eine Schwenkung des Kolbens in Bezug auf die Achse des Stocks ermöglicht.

12. Abstützung nach einem der Ansprüche 1 bis 11, wobei eine mechanische Rastverbindung (332, 5132) zum Halten der Controlleraufnahme (30, 31) in ihrer Position auf dem Zapfen (50, 51) beiträgt.

13. Abstützung nach einem der Ansprüche 1 bis 12, wobei die Controlleraufnahme (30, 31) Innenwände aufweist, die mit einer Beschichtung aus Gummi oder Silikon überzogen sind.

14. Abstützung nach einem der Ansprüche 1 bis 13, wobei der Controller (40, 41) einen Griff (400, 410) aufweist, der mit einer Halteschlaufe versehen ist, die dazu eingerichtet ist, um das Handgelenk des Spielers gelegt zu werden, wobei die Controlleraufnahme (30, 31) eine Wand aufweist, die ein Loch (300) zur Durchführung der Halteschlaufe aufweist.

15. Vorrichtung zur Befestigung eines Controllers für Videospiele der virtuellen Realität, welche aufweist:
- eine greifbare Aufnahme (30, 31), die dazu eingerichtet ist, einen Controller (40, 41) durch Einstecken aufzunehmen,
**dadurch gekennzeichnet, dass**:
- die Vorrichtung einen Zapfen (50, 51) aufweist, auf welchem die Controlleraufnahme (30, 31) angebracht wird,
- die Controlleraufnahme (30, 31) dafür ausgelegt ist, lösbar am Zapfen (50, 51) in Eingriff zu gelangen,
- eine magnetische Verbindung, die eine Magnetkraft ausübt, das Halten der Controlleraufnahme (30, 31) in ihrer Position auf dem Zapfen (50, 51) sicherstellt,
- die magnetische Verbindung derart gestaltet ist, dass der Eingriff/das Lösen der Controlleraufnahme (30, 31) am bzw. vom Zapfen (50, 51) durch eine seitliche Bewegung dieser Aufnahme bewirkt wird, wobei die Magnetkraft in die Richtung dieser seitlichen Bewegung gerichtet ist.

## Claims

1. Controller support for virtual reality video games, comprising:
- a rod (2),
- at least one grippable receptacle (30, 31) suitable for fittingly receiving a controller (40, 41),
- the controller receptacle (30, 31) is secured to the rod (2),
**characterized in that:**
- the controller receptacle (30, 31) is secured to the rod (2) via a tenon (50, 51),
- the controller receptacle (30, 31) is configured to be engaged removably on the tenon (50, 51),
- a magnetic link exerting a magnetic force ensures that the controller receptacle (30, 31) is held in position on the tenon (50, 51),
- the magnetic link is configured such that the engaging/disengaging of the controller receptacle (30, 31) on the tenon (50, 51) is done by a lateral movement of said receptacle, the magnetic force being oriented in the direction of this lateral movement.

2. Support according to Claim 1, wherein the direction of the magnetic force is normal to the sagittal median plane (P) of the rod (2) or oriented according to a solid angle (S) less than or equal to 0.5 steradian, the axis of this solid angle being normal to said sagittal median plane.

3. Support according to either of Claims 1 and 2, wherein the controller receptacle (30, 31) comprises a magnetized part (63), respectively a metal part, cooperating with a metal part (65), respectively magnetized part, formed on the tenon (50, 51).

4. Support according to either of Claims 1 and 2, wherein the controller receptacle (30, 31) comprises a magnetized part (63) cooperating with another magnetized part formed on the tenon (50, 51).

5. Support according to one of Claims 1 to 4, wherein the controller receptacle (30, 31) comprises a reservation which covers a part of the tenon (50, 51) when said receptacle is engaged on said tenon, which reservation is delimited by a lateral wall (330) and a bottom wall (331).

6. Support according to Claim 5, wherein the lateral wall (330) of the reservation is oriented in the direction of the lateral movement allowing the engaging/disengaging of the controller receptacle (30, 31), such that said lateral wall serves to guide said receptacle when it is being engaged/disengaged on the tenon (50, 51).

7. Support according to either of Claims 5 and 6 taken in combination with either of Claims 3 and 4, wherein the magnetized part (65) of the controller receptacle (30, 31) is disposed at the level of the bottom wall (331).

8. Support according to one of Claims 5 to 7, wherein the lateral wall (330) of the reservation comprises at least one surface (3301, 3302) which engages with a complementary surface (5101, 5102) of the covered part of the tenon (50, 51) when said receptacle is engaged on said tenon and when said receptacle is stressed in the axis of the rod (2).

9. Support according to one of Claims 1 to 8, wherein the tenon (50, 51) is mounted on an articulation (500, 510) allowing a rotation of the controller receptacle (30, 31) in a plane passing through the axis of the rod (2) .

10. Support according to one of Claims 1 to 9, wherein the rod (2) has at least two mutually articulating portions (20, 21), each of said portions is provided with a controller receptacle (30, 31) mounted on an articulation (500, 510).

11. Support according to one of Claims 1 to 10, wherein the rod (2) comprises a crosshead (23) of which a part (232) is shaped so as to form a cheek rest, which crosshead is mounted on an articulation (231) allowing a pivoting of said crosshead with respect to the axis of said rod.

12. Support according to one of Claims 1 to 11, wherein a mechanical snap-fitting link (332, 5132) helps to hold the controller receptacle (30, 31) in position on the tenon (50, 51).

13. Support according to one of Claims 1 to 12, wherein the controller receptacle (30, 31) comprises inner walls covered with a rubber or silicone coating.

14. Support according to one of Claims 1 to 13, wherein the controller (40, 41) has a joystick (400, 410) provided with a strap suitable for being passed around the wrist of the player, the controller receptacle (30, 31) having a wall including a hole (300) for the passage of said strap.

15. Device for fixing a controller for virtual reality video games, comprising:
- a grippable receptacle (30, 31) suitable for fittingly receiving a controller (40, 41),
**characterized in that:**
- the device comprises a tenon (50, 51) to which the controller receptacle (30, 31) is secured,
- the controller receptacle (30, 31) is configured to be engaged removably on the tenon (50, 51),
- a magnetic link exerting a magnetic force ensures that the controller receptacle (30, 31) is held in position on the tenon (50, 51),
- the magnetic link is configured such that the engaging/disengaging of the controller receptacle (30, 31) on the tenon (50, 51) is done by a lateral movement of said receptacle, the magnetic force being oriented in the direction of this lateral movement.
